# EUROPÄISCHE PATENTSCHRIFT

(11) **EP 0 591 698 B1**
(45) Veröffentlichungstag und Bekanntmachung des Hinweises auf die Patenterteilung: **23.04.1997**
(21) Anmeldenummer: 93114521.3
(22) Anmeldetag: 09.09.1993
(51) Int. Cl.: C04B 35/56, C04B 35/10

(54) **Sinterkörper aus Siliciumcarbid oder Borcarbid und Verfahren zu deren Herstellung**
Sintered bodies of silicon carbide or boron carbide and method of their production
Corps frittés en carbure de silicium ou carbure de bore et procédé de leur fabrication

(30) Priorität: 06.10.1992 DE 4233626
(43) Veröffentlichungstag der Anmeldung: 13.04.1994
(73) Patentinhaber: INSTITUT FÜR NEUE MATERIALIEN gemeinnützige GmbH, 66123 Saarbrücken (DE)
(72) Erfinder: Aslan, Mesut, D-66953 Pirmasens (DE); Nass, Rüdiger, D-66292 Riegelsberg (DE); Nonninger, Ralph, D-66129 Saarbrücken-Bübingen (DE); Schmidt, Helmut, D-66130 Saarbrücken-Güdingen (DE)
(74) Vertreter: Barz, Peter, Dr.

(56) Entgegenhaltungen:
- US-A- 5 009 822
- US-A- 5 102 592

## Beschreibung

Siliciumcarbid und Borcarbid sind Hochtemperatur-Werkstoffe, der entweder allein oder zusammen mit anderen Keramikmaterialien wie Al₂O₃, ZrO₂, Si₃N₄, Mullit, TiC, Ti(C,N), AlN, TiB₂ oder ZrB₂ zu Sinterkörpern verarbeitet werden können. Zu diesem Zweck wird zunächst eine Suspension (Schlicker) der Ausgangsmaterialien in einem wäßrigen oder organischen Dispergiermedium hergestellt. Aus dem Schlicker wird ein Sinterpulver gewonnen, das entweder direkt zu einem Grünkörper gepreßt wird oder zunächst redispergiert und dann z.B. durch Foliengießen, Schlickergießen, Druckgießen oder Elektrophorese zu einem Grünkörper geformt wird. Aus dem Grünkörper erhält man schließlich durch Sintern bei z.B. 1000 bis 2500°C den gewünschten Sinterkörper.

Zum Dichtsintern von SiC oder B₄C sind Sinteradditive erforderlich, die normalerweise ein Zweikomponentensystem aus feindispersem Kohlenstoff (Ruß) und z.B. Al, B, Al₂O₃ oder B₄C (im Falle von SiC) bzw. SiC (im Falle von B₄C) umfassen. Dispergiert man diese Sinteradditive bei der Herstellung des SiC- oder B₄C-Schlickers in wäßrigen oder organischen Systemen, treten aufgrund der unterschiedlichen oberflächenchemischen Eigenschaften der Einzelkomponenten und der schlechten Benetzbarkeit des Rußes Schwierigkeiten auf: der Ruß schwimmt zur Oberfläche des Dispergiermediums auf und kann nicht in der gewünschten Form gleichmäßig auf der SiC- bzw. B₄C-Oberfläche niedergeschlagen werden.

Bei SiC-Kompositen aus SiC und anderen Keramikmaterialien sind zwar derartige Sinteradditive nicht unbedingt erforderlich, jedoch kommt es auch hier beim Dispergieren der Ausgangsmaterialien in wäßrigen oder organischen Systemen aufgrund der unterschiedlichen oberflächenchemischen Eigenschaften zur unerwünschten Bildung von Agglomeraten und Inhomogenitäten in dem erhaltenen Mehrkomponenten-Schlicker.

Es wäre an sich für jedes einzelne Ausgangsmaterial eine spezielle Dispergierhilfe erforderlich, jedoch sind die Dispergierhilfen zum Teil nicht miteinander verträglich und außerdem führte dieser Lösungsweg zu hochkomplizierten Systemen.

US-A-5 102 592 beschreibt ein Verfahren, bei dem ein keramisches Ausgangspulver (Si₃N₄) gleichmäßig mit einem Sinteradditiv (Metall) beschichtet wird, indem man das Pulver in einem flüssigen Medium dispergiert, das eine gelöste Metallverbindung (Vorstufe des Sinteradditivs) enthält, die aufgrund des Zeta-Potentials des keramischen Pulvers beim pH der Dispersion auf der Oberfläche der Teilchen als im wesentlichen monomolekulare Schicht chemisorbiert wird, worauf man die Metallverbindung unter Zurücklassung des Sinteradditivs thermisch zersetzt.

US-A-5 009 822 ist auf ein Verfahren gerichtet, mit dem keramische Materialien aus Al₂O₃ oder Al₂O₃/ZrO₂ mit gleichmäßig darin dispergierten SiC-Whiskern hergestellt werden können. In diesem Verfahren können auch Sinteradditive eingesetzt werden.

Ziel der Erfindung ist es, ein Verfahren zur Herstellung von Sinterkörpern aus SiC oder B₄C oder Kompositen aus SiC und mindestens einem anderen Keramikmaterial bereitzustellen, das eine einfache und stabile Herstellung eines feindispersen Mehrkomponenten-Schlickers von homogener Verteilung und damit eine gezielte Einstellung der Eigenschaften des erhaltenen Grünkörpers bzw. Sinterkörpers ermöglicht.

In einer ersten Ausführungsform der Erfindung, nämlich der Herstellung von Sinterkörpern aus Siliciumcarbid oder Borcarbid, wird dieses Ziel dadurch erreicht, daß man
a) Siliciumcarbid oder Borcarbid in einem wäßrigen oder organischen Medium suspendiert und durch Einstellen eines geeigneten pH-Wertes negative oder positive Oberflächenladungen erzeugt,
b) ein teilchenförmiges Sinteradditiv das Oberflächenladungen von der dem Siliciumcarbid oder Borcarbid entgegengesetzten Polarität aufweist, zumischt,
c) den erhaltenen Schlicker direkt zu einem Grünkörper formt oder
c') aus dem erhaltenen Schlicker ein Sinterpulver gewinnt und dieses zu einem Grünkörper formt und
d) den Grünkörper zu einem Sinterkörper sintert.

In einer zweiten Ausführungsform der Erfindung, nämlich der Herstellung von Sinterkörpern aus Siliciumcarbid-Kompositen, die Siliciumcarbid und mindestens ein anderes Keramikmaterial enthalten, wird dieses Ziel dadurch erreicht, daß man
a) Siliciumcarbid und/oder das andere Keramikmaterial mit einem Oberflächenmodifizierungsmittel behandelt, das funktionelle Gruppen aufweist, welche durch Einstellen eines geeigneten pH-Wertes in negativ oder positiv geladene Gruppen überführt werden können,
b) das oberflächenmodifizierte Material in einem wäßrigen oder organischen Medium suspendiert und durch Einstellen eines geeigneten pH-Wertes negative oder positive Oberflächenladungen erzeugt,
c) gegebenenfalls noch nicht vorhandene Komponenten des Siliciumcarbid-Komposits zumischt, wobei diese Komponenten Oberflächenladungen derselben Polarität wie die bereits vorhandene(n) Komponente(n) aufweisen,
d) den erhaltenen Mehrkomponenten-Schlicker direkt zu einem Grünkörper formt oder
d') aus dem erhaltenen Mehrkomponenten-Schlicker ein Sinterpulver gewinnt und dieses zu einem Grünkörper formt und
e) den Grünkörper zu einem Sinterkörper sintert.

In der ersten Ausführungsform des erfindungsgemäßen Verfahrens wird SiC oder B₄C in einem wäßrigen oder organischen Medium suspendiert. Das SiC oder B₄C haben hierbei eine Korngröße von z.B. 0,005 bis 100 µm, vorzugsweise 0,01 bis 50 µm, besonders bevorzugt 0,05 bis 5 µm. Es können sowohl SiC-Pulver als auch SiC-Whisker, SiC-Plateletts und SiC-Fasern eingesetzt werden.

Als organische Dispergiermedien eignen sich mit Wasser mischbare organische Lösungsmittel wie z.B. Alkohole, Ester, Ketone, Dimehthylformamid und Dimethylsulfoxid.

Die an der Oberfläche des SiC vorhandenen Si-OH Gruppen werden in Gegenwart von Protonen oder Hydroxylionen in geladene Gruppen Si-OH₂⁺ bzw. Si-O⁻ überführt, die eine elektrostatische Abstoßung der SiC-Feinteilchen und damit eine feindisperse Suspension bewirken. An der Oberfläche von B₄C sind B-OH Gruppen vorhanden, die analog in Gegenwart von Protonen oder Hydroxylgruppen in geladene Gruppen B-OH₂⁺ bzw. B-O⁻ überführt werden.

Vorzugsweise wird die Ausbildung negativer oder positiver Oberflächenladungen durch Zusatz einer Säure oder Base bewirkt bzw. unterstützt. Für diesen Zweck geeignete Säuren sind z.B. anorganische Säuren wie HCl, HNO₃, H₃PO₄ und H₂SO₄ sowie organische Carbonsäuren wie Essigsäure, Propionsäure, Citronensäure, Bernsteinsäure, Oxalsäure und Benzoesäure. Geeignete Basen sind z.B. NH₃, NaOH, KOH, Ca(OH)₂ sowie primäre, sekundäre und tertiäre, aliphatische und aromatische Amine und Tetraalkylammoniumhydroxide.

Die auf diese Weise erzeugten Oberflächenladungen sind als sogenanntes Zeta-Potential meßbar. Das Zeta-Potential ist pH-abhängig und in Relation zum isoelektrischen Punkt des jeweiligen Materials (z.B. des SiC) entweder positiv oder negativ. Durch die elektrostatische Aufladung mit gleicher Polarität bleiben die dispergierten Einzelteilchen stabil in Suspension.

Das in der ersten Ausführungsform des erfindungsgemäßen Verfahrens verwendete teilchenförmige Sinteradditiv ist im allgemeinen ein Kohlenstoff (z.B. Ruß) enthaltendes Zweikomponenten-Sinteradditiv, vorzugsweise C/Al, C/B, C/Al₂O₃ oder C/B₄C (im Falle von SiC) bzw. C/SiC (im Falle von B₄C).

Die Korngröße des Kohlenstoff richtet sich hierbei nach der Feinheit des SiC bzw. B₄C, wobei der Kohlenstoff umso feiner sein sollte, je feiner das SiC bzw. B₄C sind. Im allgemeinen hat der Kohlenstoff eine Korngröße von 1 bis 100 nm, vorzugsweise 5 bis 80 nm, besonders bevorzugt 5 bis 50 nm. Die Korngröße der anderen Sinteradditive beträgt gewöhnlich 0,001 bis 10 µm, vorzugsweise 0,005 bis 5 µm, besonders bevorzugt 0,01 bis 1 µm.

Im erfindungsgemäßen Verfahren wird das Sinteradditiv dem SiC-oder B₄C-Schlicker in einem Zustand zugemischt, in dem es Oberflächenladungen von der dem SiC bzw. B₄C entgegengesetzten Polarität aufweist. Auf diese Weise ist eine gleichmäßige Verteilung des Sinteradditivs auf der SiC- bzw. B₄C-Oberfläche möglich.

Die dem SiC oder B₄C entgegengesetzte elektrostatische Aufladung des Sinteradditivs kann z.B. im Falle von Kohlenstoff dadurch erreicht werden, daß Ruß-Typen mit sauren oder basischen Oberflächengruppen eingesetzt werden. Basische Ruß-Typen erhält man z.B. im Furnace-Ruß-Verfahren in reduzierender Atmosphäre. Saure Ruß-Typen entstehen z.B. im Gasruß-Verfahren in oxidierender Atmosphäre. Handelsübliche basische Ruße sind z.B. PRINTEX A, G, L, L6 und P, PRINTEX 3, 25, 30, 40, 45, 55, 60, 75, 80, 85, 90, 95, 200 und 300 von DEGUSSA. Handelsübliche saure Ruße sind z.B. Farbruß FW 1, FW 2, FW 2V, FW 18, FW 200, S 160 und S 170, Spezialschwarz 4, 4A, 5, 6, 100, 250, 350 und 550, PRINTEX 150T, U, V, 140 U und 140 V von DEGUSSA.

Bei den oxidischen Sinteradditiven können Oberflächenladungen der gewünschten Polarität in ähnlicher Weise wie bei SiC oder B₄C erzeugt werden, d.h. durch Einstellen eines geeigneten pH-Wertes mit Hilfe einer Säure oder Base.

Beim Vermischen von SiC- oder B₄C-Suspension und Sinteradditiv haftet letzteres aufgrund der starken elektrostatischen Anziehung stabil auf der Oberfläche der SiC- bzw. B₄C-Teilchen. Im Falle der Verwendung eines Ruß enthaltenden Zweikomponenten-Sinteradditivs wird stets der Ruß mit einer dem SiC oder B₄C entgegengesetzten Oberflächenladung versehen, da andernfalls keine stabile Ablagerung und gleichmäßige Verteilung auf der SiC- bzw. B₄C-Oberfläche möglich ist. Die andere Sinteradditiv-Komponente, z.B. Al₂O₃ oder B₄C bzw. SiC, kann dem Schlicker gegebenenfalls ungeladen zugemischt werden. Gegebenenfalls kann die andere Sinteradditiv-Komponente auch erst später, nach Gewinnung des Sinterpulvers und erneutem Redispergieren mit Hilfe von nicht-ionischen Tensiden, zugegeben werden.

Die Zusatzmenge an Sinteradditiven, bezogen auf SiC bzw. B₄C, beträgt gewöhnlich 0,1 bis 5 Gew-.%, vorzugsweise 0,5 bis 3 Gew.-% Kohlenstoff und 0,1 bis 5 Gew.-%, vorzugsweise 0,2 bis 3 Gew.-% andere Additive wie Al, B, B₄C bzw. SiC.

In der zweiten Ausführungsform des erfindungsgemäßen Verfahrens werden Sinterkörper aus SiC-Kompositen, die SiC und mindestens ein anderes Keramikmaterial enthalten, unter Einsatz eines Mehrkomponenten-Schlickers hergestellt. Auch hierbei trat im Stand der Technik das Problem auf, daß die Einzelkomponenten des SiC-Komposits beim Suspendieren in einem wäßrigen oder organischen System aufgrund ihrer unterschiedlichen Oberflächeneigenschaften und ihres verschiedenen isoelektrischen Punkts zur Bildung von Agglomeraten neigten und deshalb Inhomogenitäten innerhalb des Mehrkomponenten-Schlickers und den daraus hergestellten Sinterpulvern und -körpern verursachten.

Erfindungsgemäß wird dieses Problem dadurch gelöst, daß man das SiC und/oder das andere Keramikmaterial mit einem Oberflächenmodifizierungsmittel behandelt, das funktionelle Gruppen aufweist, welche durch Einstellen eines geeigneten pH-Wertes in negativ oder positiv geladene Gruppen überführt werden können. Vorzugsweise wird allein das SiC oberflächenbehandelt und dabei gezielt den elektrostatischen Oberflächeneigenschaften, insbesondere dem Zeta-Potential, des anderen Keramikmaterials angepaßt. Bei dieser Ausführungsform des erfindungsgemäßen Verfahrens werden das SiC und das andere Keramikmaterial stets mit der gleichen Polarität aufgeladen, um die gewünschte feindisperse und homogene Verteilung der Einzelkomponenten zu erzielen.

Das andere Keramikmaterial kann z.B. Al₂O₃, Mullit, ZrO₂, MgO, TiO₂ (Cordierit), TiC, TiN, Ti(C,N), Si, Si₃N₄, AlN, B₄C, TiB₂ oder ZrB₂ sein. Der Volumenanteil SiC an diesen SiC-Kompositen beträgt gewöhnlich < 90 Vol.-%, vorzugsweise < 75 Vol.-%, besonders bevorzugt < 50 Vol.-%.

Als Oberflächenmodifizierungsmittel eignen sich z.B. Silane, Säurechloride, Carbonsäureamide, Carbonsäureanhydride und Carbonsäureester.

Beispiele für verwendbare Silane sind Mercaptopropyltrimethoxysilan, 3-(Trimethoxysilyl)propylmethacrylat, 3-(Triethoxysilyl)propylbernsteinsäureanhydrid, Cyanoethyltrimethoxysilan,3-Thiocyanatopropyltriethoxysilan, 3-(2-Aminoethylamino)propyltrimethoxysilan, 3-Aminopropyltriethoxysilan, 7-Oct-1-enyltrimethoxysilan, Phenyltrimethoxysilan, n-Butyltrimethoxysilan, n-Octyltrimethoxysilan, n-Decyltrimethoxysilan, n-Dodecyltriethoxysilan, n-Hexadecyltrimethoxysilan, n-Octadecyltrimethoxysilan, n-Octadecyltrichlorsilan, Dichlormethylvinylsilan, Diethoxymethylvinylsilan, Dimethyloctadecylmethoxysilan, tert-Butyldimethylchlorsilanmethyldisilazan, Diethoxydimethylsilan, Diethyltrimethylsilylphosphit, 2-(Diphenylmethylsilyl)ethanol, Diphenylsilandiol, Ethyl(diphenylmethylsilyl)acetat, Ethyl-2,2,5,5-tetramethyl-1,2,5-azadisilolidin-1-acetat, Ethyltriethoxysilan, Hydroxytriphenylsilan, Trimethylethoxysilan, Trimethylsilylacetat, Allyldimethylchlorsilan, (3-Cyanopropyl)dimethylchlorsilan und Vinyltriethoxysilan.

Beispiele für verwendbare Säurechloride sind Acetylchlorid, Propanoylchlorid, Butanoylchlorid und Valerylchlorid. Verwendbare Carbonsäureanhydride sind z.B. Acetanhydrid und Propionsäureanhydrid. Als Carbonsäureester eignet sich z.B. Essigsäureethylester und als Carbonsäureamid Acetamid.

Zur Oberflächenmodifizierung werden das SiC oder das andere Keramikmaterial gewöhnlich in einem unpolaren, aprotischen Lösungsmittel, z.B. einem aliphatischen oder aromatischen Kohlenwasserstoff wie Hexan oder Toluol oder einem Ether wie Diethylether oder THF, suspendiert und mit dem Oberflächenmodifizierungsmittel versetzt.

Anschließend kann das Lösungsmittel abgezogen und das oberflächenmodifizierte Material in einem wäßrigen oder organischen Medium resuspendiert werden, worauf man durch Einstellen eines geeigneten pH-Wertes positive oder negative Oberflächenladungen auf dem modifizierten Material erzeugt. Enthält das Oberflächenmodifizierungsmittel z.B. basische Gruppen, wie dies bei Amino- oder Mercaptosilanen der Fall ist, können durch Einstellen eines sauren pH positive Oberflächenladungen erzeugt werden. Enthält dagegen das Oberflächenmodifizierungsmittel saure Gruppen, wie dies bei Carboxysilanen der Fall ist, werden durch Einstellen eines basischen pH negative Oberflächenladungen erzeugt.

Bei alleiniger Oberflächenmodifizierung des SiC kann die Natur des anderen (nicht-oberflächenmodifizierten) Keramikmaterials die Wahl des Oberflächenmodifizierungsmittels und der pH-Bedingungen beeinflussen. Beispielsweise läßt sich Al₂O₃ vorzugsweise in sauren Medien suspendieren, während ZrO₂ am besten in basischen Medien dispergierbar sind.

Der nach einer der erfindungsgemäßen Ausführungsformen erhaltene keramische Schlicker, der im allgemeinen einen Feststoffgehalt von 10 bis 60 Vol.-% aufweist, wird auf übliche Weise weiter verarbeitet. Er kann z.B. direkt durch Foliengießen, Schlickergießen, Druckgießen, Spritzgießen, Elektrophorese, Gelcasting, Gefrierguß, Gefrierspritzguß oder Zentrifugieren zu einem Grünkörper geformt werden.

Alternativ kann man aus dem Schlicker ein Sinterpulver z.B. durch Filtration, Abdampfen des Dispergiermediums, Sprühtrocknen oder Gefriertrocknen gewinnen. Das erhaltene Sinterpulver wird dann entweder als solches zu einem Grünkörper gepreßt, oder aber man redispergiert das Sinterpulver, vorzugsweise unter Verwendung eines Tensids als Dispergierhilfe, und verarbeitet dann die Suspension nach einem der oben genannten Formverfahren zu einem Grünkörper. Als Dispergierhilfen eignen sich in dieser Ausführungsform z.B. anorganische Säuren, wie HCl, HNO₃ und H₃PO₄; organische Säuren, wie Essigsäure, Propionsäure, Citronensäure und Bernsteinsäure; anorganische Basen, wie NaOH, KOH und Ca(OH)₂; organische Basen, wie primäre, sekundäre und tertiäre Amine sowie Tetraalkylammoniumhydroxide; organische Polyelektrolyte, wie Polyacrylsäure, Polymethacrylsäure, Polysulfonsäuren, Polycarbonsäuren, Salze (z.B. Na oder NH₄) dieser Verbindungen, N,N-Dialkylimidazoline und N-Alkylpyridiniumsalze; oder nicht-ionische Tenside, wie Polyethylenoxide, Fettsäurealkylolamide, Saccharose-fettsäureester, Trialkylaminoxide und Fettsäureester von Polyhydroxyverbindungen.

Der Grünkörper wird schließlich bei üblichen Temperaturen, z.B. im Bereich von 1000 bis 2500°C, zu einem Sinterkörper gesintert.

Die erhaltenen Sinterkörper finden Verwendung als Strukturkeramik im Hochtemperaturbereich, z.B. für Gasturbinen, Brennkammern, Rotorschaufeln und Turbinenräder; im chemischen Apparatebau für den Einsatz mit stark korrosiven Medien; als Wärmeaustauscher, Heizleiter, feuerfeste Werkstoffe im Hochtemperatur-Ofenbau; im Maschinenbau als Gleitlager und Gleitringdichtungen; in der Schleifmittelindustrie; und in der Elektroindustrie zur Herstellung von Varistoren und Gleichrichtern. Die SiC-Fasern, -Whisker und -Komposite dienen z.B. zur Verbesserung der Festigkeit und Bruchzähigkeit von oxidischen und nicht-oxidischen Hochleistungskeramiken.

Die folgenden Beispiele erläutern die Erfindung.

### Beispiel 1

### Elektrostatische Beschichtung von SiC-Pulvern mit nanodispersem Kohlenstoff:

In 200 ml Wasser werden 3 g Ruß (PRINTEX 90 von Degussa) bei pH 5-6 in einer Rührwerk-Kugelmühle dispergiert. Zu dieser Suspension werden 150 g SiC-Pulver gegeben und 2 Stunden unter Mahlen dispergiert. Anschließend wird abgesetzt und die Flüssigkeit über eine Filterpresse abfiltriert. Das erhaltene Pulver wird 10 Stunden bei 90°C getrocknet.

### Beispiel 2

### Herstellung eines wäßrigen SiC-Schlickers aus elektrostatisch beschichtetem Pulver:

150 g des nach Beispiel 1 hergestellten SiC-Pulvers und 0,97 g B₄C werden unter Zugabe von 2 Gew.-% einer nicht-ionischen Dispergierhilfe (TWEEN 80 von ICI) in 70 ml Wasser in einer Rührwerk-Kugelmühle dispergiert. Die erhaltene Suspension enthält 40 Vol.-% SiC, 2 Gew.-% Ruß und 0,65 Gew.-% B₄C. Die Viskosität ist < 15 mPa·s.

### Beispiel 3

### Herstellung von SiC-Sinterkörpern:

Aus der nach Beispiel 2 hergestellten Suspension werden nach Absetzen der Mahlkugeln durch Schlickergießen Grünkörper hergestellt und getrocknet. Diese haben eine Gründichte ≥ 60% d.Th., eine sehr enge Porengrößenverteilung um 100 nm und zeichnen sich durch eine homogene Kohlenstoffverteilung über die gesamte Scherbendicke (≤ 5 cm) aus. Beim anschließenden drucklosen Sintern bei einer Temperatur von 2050-2150°C erhält man Sinterkörper mit Sinterdichten > 97% d.Th.

### Beispiel 4

### Oberflächenmodifizierung von SiC-Pulvern mit Silanen:

In 100 ml Toluol werden die in der folgenden Tabelle genannten Organoalkoxysilane gelöst. Zu der Lösung werden unter ständigem Rühren 50 g SiC-Pulver gegeben. Nach beendeter Zugabe wird das Gemisch unter Rückfluß erhitzt. Nach einer Reaktionszeit von 5 Stunden wird die heiße Suspension filtriert und der Filterrückstand mit Toluol gewaschen. Das feuchte Pulver wird anschließend 12 Stunden bei 115°C getrocknet.

**Tabelle**

| Silane | Menge (g) |
|---|---|
| Mercaptopropyltrimethoxysilan | 1,047 |
| 3-(Trimethoxysilyl)propylmethacrylat | 1,324 |
| 3-(Triethoxysilyl)propylbernsteinsäureanhydrid | 1,621 |
| Cyanoethyltrimethoxysilan | 0,933 |
| 3-Thiocyanatopropyltriethoxysilan | 1,179 |
| 3-(2-Aminoethylamino)propyltrimethoxysilan | 1,184 |
| 3-Aminopropyltriethoxysilan | 1,179 |
| 7-Oct-1-enyltrimethoxysilan | 1,239 |
| Phenyltrimethoxysilan | 1,057 |
| n-Butyltrimethoxysilan | 0,951 |
| n-Octyltrimethoxysilan | 1.250 |
| n-Decyltrimethoxysilan | 1,397 |
| n-Dodecyltriethoxysilan | 1,774 |
| n-Hexadecyltrimethoxysilan | 1,736 |
| n-Octadecyltrimethoxysilan | 1,998 |
| n-Octadecyltrichlorsilan | 2,066 |
| Dichlormethylvinylsilan | 0,751 |
| Diethoxymethylvinylsilan | 0.855 |
| Dimethyloctadecylmethoxysilan | 1,828 |

### Beispiel 5

### Herstellung eines SiC-Al₂O₃-Sinterkörpers:

75 g SiC-Pulver, das mit 3-(2-Aminoethylamino)propyltrimethoxysilan oberflächenmodifiziert worden ist, werden mit 225 g Al₂O₃-Pulver (A 16 S 6, Alwa) in einer Rührwerk-Kugelmühle mit einer sauer stabilisierten Dispergierhilfe (KV 5080, Zschimmer & Schwarz; Targon 420, BK Ladenburg) bei pH-Werten zwischen 5 und 6 in 120 ml Wasser dispergiert. Der entstehende Schlicker hat einen Feststoffgehalt von 40 Vol.% und eine Viskosität von < 20 mPa·s.

Der Schlicker wird dann auf übliche Weise zu einem Formkörper verarbeitet und anschließend bei Temperaturen von 1400 bis 1500°C in Luftatmosphäre zu einem Sinterkörper gesintert.

## Patentansprüche

1. Verfahren zur Herstellung von Sinterkörpern aus Siliciumcarbid oder Borcarbid, dadurch gekennzeichnet, daß man
a) Siliciumcarbid oder Borcarbid in einem wäßrigen oder organischen Medium suspendiert und durch Einstellen eines geeigneten pH-Wertes negative oder positive Oberflächenladungen erzeugt,
b) ein teilchenförmiges Sinteradditiv, das Oberflächenladungen von der dem Siliciumcarbid oder Borcarbid entgegengesetzten Polarität aufweist, zumischt,
c) den erhaltenen Schlicker direkt zu einem Grünkörper formt oder
c') aus dem erhaltenen Schlicker ein Sinterpulver gewinnt und dieses zu einem Grünkörper formt und
d) den Grünkörper zu einem Sinterkörper sintert.

2. Verfahren nach Anspruch 1, dadurch gekennzeichnet, daß man das Sinteradditiv als Suspension in einem wäßrigen oder organischen Medium zugibt.

3. Verfahren nach Anspruch 1 oder 2, dadurch gekennzeichnet, daß das Sinteradditiv durch Einstellen eines geeigneten pH-Wertes mit Oberflächenladungen entgegengesetzter Polarität versehen worden ist.

4. Verfahren nach einem der Ansprüche 1 bis 3, dadurch gekennzeichnet, daß das Sinteradditiv ein Kohlenstoff enthaltendes Zweikomponenten-Sinteradditiv ist.

5. Verfahren nach Anspruch 4, dadurch gekennzeichnet, daß das Sinteradditiv C/Al, C/B, C/Al₂O₃ oder C/B₄C (im Falle von SiC) bzw. C/SiC (im Falle von B₄C) ist.

6. Verfahren nach einem der Ansprüche 1 bis 5, dadurch gekennzeichnet, daß man ein Siliciumcarbid oder Borcarbid einsetzt, das mit einem Oberflächenmodifizierungsmittel behandelt worden ist, das funktionelle Gruppen aufweist, welche durch Einstellen eines geeigneten pH-Wertes in negativ oder positiv geladene Gruppen überführt werden können.

7. Verfahren nach Anspruch 6, dadurch gekennzeichnet, daß man als Oberflächenmodifizierungsmittel ein Silan, Säurechlorid, Carbonsäureamid, Carbonsäureanhydrid oder einen Carbonsäureester verwendet.

8. Verfahren zur Herstellung von Sinterkörpern aus Siliciumcarbid-Kompositen, die Siliciumcarbid und mindestens ein anderes Keramikmaterial enthalten, dadurch gekennzeichnet, daß man
a) Siliciumcarbid und/oder das andere Keramikmaterial mit einem Oberflächenmodifizierungsmittel behandelt, das funktionelle Gruppen aufweist, welche durch Einstellen eines geeigneten pH-Wertes in negativ oder positiv geladene Gruppen überführt werden können,
b) das oberflächenmodifizierte Material in einem wäßrigen oder organischen Medium suspendiert und durch Einstellen eines geeigneten pH-Wertes negative oder positive Oberflächenladungen erzeugt,
c) gegebenenfalls noch nicht vorhandene Komponenten des Siliciumcarbid-Komposits zumischt, wobei diese Komponenten Oberflächenladungen derselben Polarität wie die bereits vorhandene(n) Komponente(n) aufweisen,
d) den erhaltenen Mehrkomponenten-Schlicker direkt zu einem Grünkörper formt oder
d') aus dem erhaltenen Mehrkomponenten-Schlicker ein Sinterpulver gewinnt und dieses zu einem Grünkörper formt und
e) den Grünkörper zu einem Sinterkörper sintert.

9. Verfahren nach Anspruch 8, dadurch gekennzeichnet, daR das andere Keramikmaterial Al₂O₃, Mullit, ZrO₂, MgO, TiO₂, TiC, TiN, Ti(C,N), Si, Si₃N₄, AlN, B₄C, TiB₂ oder ZrB₂ ist.

10. Verfahren nach Anspruch 8 oder 9, dadurch gekennzeichnet, daß das andere Keramikmaterial mehr als 50 Vol-% des Siliciumcarbid-Komposits ausmacht.

11. Verfahren nach einem der Ansprüche 8 bis 10, dadurch gekennzeichnet, daß man als Oberflächenmodifizierungsmittel ein Silan, Säurechlorid, Carbonsäureamid, Carbonsäureanhydrid oder einen Carbonsäureester verwendet.

## Claims

1. Process for the production of sintered bodies of silicon carbide or boron carbide, characterized in that
a) silicon carbide or boron carbide is suspended in an aqueous or organic medium and negative or positive surface charges are created by adjusting an appropriate pH value,
b) a particulate sintering additive having surface charges opposite to the polarity of said silicon carbide or boron carbide is admixed,
c) the obtained slip is shaped directly into a green body or
c') a sinter powder is recovered from said slip, which sinter powder is shaped into a green body, and
d) the green body is sintered to form a sintered body.

2. Process according to Claim 1, characterized in that said sintering additive is added as suspension in an aqueous or organic medium.

3. Process according to Claim 1 or 2, characterized in that said sintering additive has been provided with surface charges of opposite polarity by adjusting a suitable pH value.

4. Process according to Claims 1 to 3, characterized in that said sintering additive is a carbonaceous two-component sintering additive.

5. Process according to Claim 4, characterized in that said sintering additive is C/Al, C/B, C/Al₂O₃ or C/B₄C (in the case of SiC) or C/SiC (in the case of B₄C), respectively.

6. Process according to any one of Claims 1 to 5, characterized in that a silicon carbide or boron carbide which has been treated with a surface modifier having functional groups which can be transformed into negatively or positively charged groups by adjusting a suitable pH value is employed.

7. Process according to Claim 6, characterized in that a silane, acid chloride, carboxylic amide, carboxylic anhydride or carboxylic ester is used as surface modifier.

8. Process for the production of sintered bodies from silicon carbide composites containing silicon carbide and at least one further ceramic material, characterized in that
a) silicon carbide and/or said further ceramic material are treated with a surface modifier having functional groups which can be transformed into negatively or positively charged groups by adjusting a suitable pH value,
b) said surface-modified material is suspended in an aqueous or organic medium and negative or positive surface charges are created by adjusting a suitable pH value,
c) components of said silicon carbide composite which are not yet present are added if necessary, said components having surface charges of the same polarity as the component(s) already present,
d) the obtained multi-component slip is shaped directly into a green body, or
d') a sinter powder is recovered from said obtained multi-component slip and said sinter powder is shaped into a green body, and
e) said green body is sintered to form a sintered body.

9. Process according to Claim 8, characterized in that said further ceramic material is Al₂O₃, mullite, ZrO₂, MgO, TiO₂, TiC, TiN, Ti(C,N), Si, Si₃N₄, AlN, B₄C, TiB₂ or ZrB₂.

10. Process according to Claim 8 or 9, characterized in that said further ceramic material accounts for more than 50% by vol. of said silicon carbide composite.

11. Process according to any one of Claims 8 to 10, characterized in that a silane, acid chloride, carboxylic amide, carboxylic anhydride or a carboxylic ester is employed as surface modifier.

## Revendications

1. Procédé de production de corps frittés à base de carbure de silicium ou de carbure de bore, caractérisé en ce qu'on :
a) met en suspension le carbure de silicium ou le carbure de bore dans un milieu aqueux ou organique et produit des charges de surface négatives ou positives par ajustement du pH à une valeur appropriée,
b) ajoute un additif de frittage sous forme de particules, lequel présente des charges de surface de polarité opposée à celle du carbure de silicium ou du carbure de bore,
c) façonne la barbotine obtenue directement en un corps vert ou
c') obtient une poudre frittée à partir de la barbotine obtenue et façonne cette poudre en un corps vert et
d) fritte le corps vert en un corps fritté.

2. Procédé selon la revendication 1, caractérisé en ce qu'on ajoute l'additif de frittage sous forme de suspension dans un milieu aqueux ou organique.

3. Procédé selon la revendication 1 ou 2, caractérisé en ce que l'additif de frittage a été doté de charges de surface de polarité opposée par ajustement du pH à une valeur appropriée.

4. Procédé selon l'une des revendications 1 à 3, caractérisé en ce que l'additif de frittage est un additif de frittage à deux composants contenant du carbone.

5. Procédé selon la revendication 4, caractérisé en ce que l'additif de frittage est C/Al, C/B, C/Al₂O₃ ou C/B₄C (dans le cas de SiC) ou C/SiC (dans le cas de B₄C).

6. Procédé selon l'une des revendications 1 à 5, caractérisé en ce qu'on utilise un carbure de silicium ou un carbure de bore qui a été traité avec un agent de modification de surface qui présente des groupements fonctionnels qui peuvent être transformés en groupements chargés négativement ou positivement par ajustement du pH à une valeur appropriée.

7. Procédé selon la revendication 6, caractérisé en ce qu'on utilise, en tant qu'agent de modification de surface, un silane, un chlorure d'acide, un amide d'acide carboxylique, un anhydride d'acide carboxylique ou un ester d'acide carboxylique.

8. Procédé de production de corps frittés à base de composites de carbure de silicium qui contiennent du carbure de silicium et au moins un autre matériau céramique, caractérisé en ce qu'on
a) traite le carbure de silicium et/ou l'autre matériau céramique avec un agent de modification de surface qui présente des groupements fonctionnels qui peuvent être transformés en groupements chargés négativement ou positivement par ajustement du pH à une valeur appropriée,
b) met en suspension le matériau modifié à la surface dans un milieu aqueux ou organique et produit des charges de surface négatives ou positives par ajustement du pH à une valeur appropriée,
c) ajoute le cas échéant les composants non encore présents du composite de carbure de silicium, ces composants présentant des charges de surface de même polarité que le ou les composant(s) déjà présent(s),
d) façonne la barbotine à plusieurs composants obtenue directement en un corps vert ou
d') obtient une poudre frittée à partir de la barbotine à plusieurs composants obtenue et façonne cette poudre en un corps vert et
e) fritte le corps vert en un corps fritté.

9. Procédé selon la revendication 8, caractérisé en ce que l'autre matériau céramique est Al₂O₃, la mullite, ZrO₂, MgO, TiO₂, TiC, TiN, Ti(C,N), Si, Si₃N₄, AlN, B₄C, TiB₂ ou ZrB₂.

10. Procédé selon la revendication 8 ou 9, caractérisé en ce l'autre matériau céramique constitue plus de 50 % en volume du composite de carbure de silicium.

11. Procédé selon l'une des revendications 8 à 10, caractérisé en ce qu'on utilise, en tant qu'agent de modification de surface, un silane, un chlorure d'acide, un amide d'acide carboxylique, un anhydride d'acide carboxylique ou un ester d'acide carboxylique.
